(19) Europäisches Patentamt
European Patent Office
Office européen des brevets

(11) Publication number: **0 427 695 A2**

(12) # EUROPEAN PATENT APPLICATION

(21) Application number: **90870171.7**

(22) Date of filing: **08.10.90**

(51) Int. Cl.5: **A01N 47/30**, //(A01N47/30, 43:653)

(30) Priority: **09.10.89 GB 8922715**

(43) Date of publication of application: **15.05.91 Bulletin 91/20**

(84) Designated Contracting States: **AT BE CH DE DK ES FR GB GR IT LI LU NL SE**

(71) Applicant: **Monsanto Company**
**Patent Department 800 North Lindbergh Boulevard**
**St. Louis Missouri 63167-7020(US)**

(72) Inventor: **Klevorn, Thomas Bernard**
**Steenwegterhulpen 9**
**B-1900 Hoeilaart(BE)**

(74) Representative: **Bosch, Henry A G et al**
**Monsanto Services International S.A. Patent Department, Avenue de Tervuren 270/272, Letter Box No. 21**
**B-1150 Brussels(BE)**

(54) **Herbicidal compositions.**

(57) The invention is related to a herbicidal composition comprising isoproturon and 1->4-chloro-3-(2,2,3,3,3-pentafluoropropoxymethyl) phenyl<-5-phenyl-1H-1,2,4-triazole-3-carboxamide within the range of weight ratio triazole derivative : isoproturon of 3:1 to 1:50. The composition demonstrates a high degree of phytotoxicity at low rates of the triazole derivative in pre-emergence and post-emergence applications.

EP 0 427 695 A2

Xerox Copy Centre

# HERBICIDAL COMPOSITIONS

This invention relates to compositions comprising the herbicide isoproturon in combination with a herbicidal triazole derivative and to their use for the pre-emergent and post-emergent control of undesired vegetation.

The urea derivative isoproturon, N-(4-isopropylphenyl)-N′, N′-dimethyl urea and referred to hereinafter as IPU, is a well known herbicide, described for example under No. 7520 in The Pesticide Manual, 8th Ed., 1987, pages 491-2, Publ. The British Crop Protection Council, London.

IPU is widely used in agriculture for the selective control of annual grasses and broadleaf weeds in crops of cereals by pre- and post-emergence application, mainly in the form of a spray solution. However, IPU has the disadvantage that rather high application rates are required to obtain an acceptable level of phytotoxicity, e.g. rates of about 1000g to 2500g active substance per hectare to obtain a phytotoxicity of 85% or more. Moreover, even at the high application rates it is not very effective in controlling growth of certain species of weeds such as, for example, Avena fatua, Veronica persica and Galium aparine.

EP-A-0 070 089 and EP-A-0 282 303 disclose certain triazole derivatives and herbicidal compositions containing the same. For example, EP-A-0 070 089 discloses the compound (hereinafter Compound A) having the formula below wherein $R^1$ is a methyl group and $R^2$ is hydrogen, and EP-A-0 282 303 discloses the compound (hereinafter Compound B) having the formula below wherein $R^1$ is a 2,2,3,3,3-pentafluoropropoxymethyl group and $R^2$ represents chlorine.

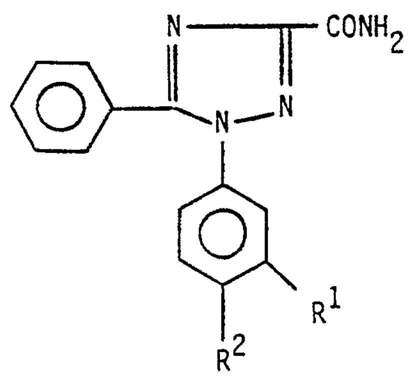

(II)

EP-A-0 182 740 discloses herbicidal compositions comprising combinations of Compound A and a herbicidal urea, sulfonyl urea or triazine derivative. The compositions are said to present good and selective phytotoxicity for the most important monocotyledonous and dicotyledonous weeds in cereals at application rates of 50g to 4000g active substance per hectare. One such composition disclosed in EP-A-0 182 740 comprises a combination of Compound A and IPU, but no data on its phytotoxicity are provided.

We have now found that compositions comprising Compound B with IPU have significantly greater herbicidal activity at comparable dosage rates than compositions comprising Compound A with IPU, especially against certain weed species, such as for example Galium aparine.

These new, improved herbicidal compositions and their use as selective herbicides are the object of the present invention. Another embodiment of the invention concerns a method for selectively killing and controlling the germination and growth of undesired plants by the application of herbicidal compositions of the invention to the seed or plant or to the locus of the seed or plant.

In a preferred embodiment of the invention the compositions comprise a combination of Compound B and IPU in a weight ratio (Compound B : IPU) which may vary from about 3:1 to 1:50, and more preferably in a ratio from 2:1 to 1:33. Most preferred is a ratio from 1:5 to 1:20.

The application rates, expressed as the sum of the weights of Compound B and IPU per hectare, may vary from about 10g/ha to about 5000g/ha. Preferred rates are from 200g/ha to 4000g/ha and more preferred rates are from 500g/ha to 3000g/ha.

The compositions of the invention can be used in the form of finely-divided powdered mixtures of Compound B and IPU, but in a preferred embodiment of the invention the compositions are used in the form of herbicidally active formulations containing one or more agriculturally acceptable adjuvants. The formulations are most preferably in the form of a dry formulation or a solution, suspension or emulsion in a suitable liquid.

Herbicidal compositions containing Compound B and IPU as well as formulations derived thereof, including concentrates of aqueous or non-aqueous solutions and of aqueous suspensions which require dilution prior to application, are all embodiments of the present invention and are all referred to hereafter by the term compositions. The compositions may contain the herbicidally active components mixture of Compound B and IPU, in a range from 0.1% to 100% weight and may also contain at least one agriculturally acceptable adjuvant in liquid or solid form. In the compositions Compound B and/or IPU may be present in free form or in the form of an agriculturally acceptable acid addition salt, complex or association product, such as for example a complex or association product formed with metal ions.

The compositions are prepared by known techniques by admixing the herbicidally active ingredients with one or more adjuvants, including diluents, extenders, carriers and conditioning agents, to provide compositions in the form of finely divided particulate solids, granules, pellets, solutions, dispersions or emulsions. Thus the active ingredients can be used with an adjuvant such as a finely divided solid, a liquid of organic origin, water, a surfactant, a dispersing agent, an emulsifying agent, a stabilising agent, an anti-freeze agent, an anti-foam agent or any suitable combination of these.

Suitable surfactants include alkyl benzene sulfonates and alkyl naphthalene sulfonates, sulfated fatty alcohols, amines or acid amides, long chain acid esters of sodium isethionate, esters of sodium sulfosuccinate, sulfated or sulfonated fatty acid esters, petroleum sulfonates, sulfonated vegetable oils, ditertiary acetylenic glycols, polyoxyethylene derivatives of alkylphenols (particularly isooctylphenol and nonylphenol) and polyoxyethylene derivatives of the mono-higher fatty acid esters of hexitol anhydrides (e.g., sorbitan), alkoxylated amines, inorganic ammonium salts, such as ammonium sulphate, ammonium nitrate and ammonium phosphates, ammonium salts derived from organic amines such as primary, secondary and tertiary amines, diamines such as ethylene diamine and piperazine, morpholine, polyamines, alkoxylated amines and amine surfactants. Preferred dispersants are methyl cellulose, polyvinyl alcohol, sodium lignin sulfonates, polymeric alkyl naphthalene sulfonates, sodium naphthalene sulfonate, and polymethylene bisnaphthalene sulfonate.

Wettable powders are water-dispersible compositions containing the active ingredients mixture, an inert solid extender and one or more wetting and dispersing agents. The inert solid extenders are usually of mineral origin such as the natural clays, diatomaceous earth and synthetic minerals derived from silica and the like. Examples of such extenders include kaolinites, attapulgite clay and synthetic magnesium silicate. The wettable powders compositions of this invention usually contain from above 0.5 to 60 parts (preferably 5 to 20 parts) of active ingredients mixture, from about 0.25 to 25 parts (preferably 1 to 15 parts) of wetting agent, from about 0.25 to 25 parts (preferably 1 to 15 parts) of dispersant and from 5 to about 95 parts (preferably 5 to 50 parts) of inert solid extender, all parts being by weight of the total composition. Where required, from about 0.1 to 2.0 parts of the solid inert extender can be replaced by a corrosion inhibitor or anti-foaming agent or both.

The compositions also include dust concentrates comprising from 0.1 to 60% by weight of the active ingredients mixture on a suitable extender; these dusts may be diluted for application at concentrations within the range of about 0.1 to 10% weight.

Compositions which are aqueous suspensions or emulsions may be prepared by stirring a non-aqueous solution of a water-insoluble active ingredients mixture and an emulsification agent with water until uniform and then homogenizing to give an emulsion of very finely divided particles. The resulting concentrated aqueous suspension is characterized by its extremely small particle size, so that when diluted and sprayed, coverage is very uniform. Suitable concentrations of these formulations contain from about 0.1 to 60%, preferably 5 to 50%, by weight of active ingredients mixture, the upper limit being determined by the solubility limit of active ingredients in the solvent.

Concentrates are usually solutions of active ingredients mixtures in water-immiscible, partially water-miscible or water-miscible solvents together with a surface active agent. Suitable solvents for the active ingredients of this invention include dimethylformamide, dimethylsulfoxide, N-methyl-pyrrolidone, hydrocarbons, amines and water-immiscible ethers, esters, or ketones. However, other high strength liquid concentrates may be formulated by dissolving the active ingredient in a solvent then diluting, e.g., with kerosene, to spray concentration.

The concentrate compositions herein generally contain from about 0.1 to 95 parts (preferably 5 to 60 parts) active ingredients mixture, about 0.25 to 50 parts (preferably 1 to 25 parts) surface active agent and where required about 4 to 94 parts solvent, all parts being by weight based on the total weight of emulsifiable oil.

The compositions of the invention can also be in the form of granules which are physically stable particulate compositions comprising active ingredient mixtures adhering to or distributed through a basic matrix of an inert, finely-divided particulate extender. In order to aid leaching of the active ingredient from

the particulate, a surface active agent such as those listed hereinbefore can be present in the composition. Natural clays, pyrophyllites, illite, and vermiculite are examples of operable classes of particulate mineral extenders. The preferred extenders are the porous, absorptive, preformed particules such as preformed and screened particulate attapulgite or heat expanded, particulate vermiculite and the finely divided clays such as kaolin clays, hydrated attapulgite or bentonitic clays. These extenders are sprayed or blended with the active ingredient to form the herbicidal granules.

The granular compositions of this invention may contain from about 0.1 to about 30 parts by weight of active ingredients mixture per 100 parts by weight of clay and 0 to about 5 parts by weight of surface active agent per 100 parts by weight of particulate clay.

The compositions of this invention can also contain other additives for example, fertilizers, other herbicides, other pesticides, safeners and other additives commonly used in herbicidal formulations, used as adjuvants or in combination with any of the above-described adjuvants. Chemicals useful in combination with the active ingredients of this invention include, for example, triazines, ureas, carbamates, acetamides, acetanilides, uracils, acetic acid or phenol derivatives, thiolcarbamates, triazoles, benzoic acids, nitriles and biphenyl ethers.

Examples which illustrate the compositions according to the invention are presented in Table 1, hereafter :

Table 1

| Examples of compositions of the invention | |
|---|---|
| Composition number | Composition content (*) Compound B / IPU |
| 1 | 31 / 500 |
| 2 | 62 / 500 |
| 3 | 125 / 500 |
| 4 | 250 / 500 |
| 5 | 500 / 500 |
| 6 | 1000 / 500 |
| 7 | 31 / 1000 |
| 8 | 62 / 1000 |
| 9 | 125 / 1000 |
| 10 | 250 / 1000 |
| 11 | 500 / 1000 |
| 12 | 1000 / 1000 |

(*) Composition given as weight ratio of the herbicidally active components without taking into account the presence of adjuvants.

A preferred embodiment of the invention relates to compositions in the form of spray solutions and flowable concentrates, and in particular to aqueous spray solutions and aqueous spray formulations obtained by dilution with water of flowable concentrates, and to their use for killing or inhibiting the growth of weeds by their pre- and post-emergence application to the locus and the weeds. These compositions are prepared by known techniques. Aqueous spray solutions can, for example, be prepared either directly, by mixing appropriate quantities of all ingredients in an appropriate volume of water, i.e. by so-called "tank mixing", or indirectly by mixing a precursor mixture or precursor solution, containing one or more of the ingredients with the appropriate amount of water and, if appropriate, with the other ingredients, or by mixing a precursor solution, containing all the ingredients in the appropriate amounts, with a suitable quantity of water.

Where all ingredients are solids, compositions of the invention can be prepared simply by dry mixing of the ingredients. Precursor solutions and spray solutions are prepared thereof by treating the dry mixture with a suitable amount of water and if appropriate with a suitable co-solvent and adjuvant.

It is understood that the compositions according to the invention, including precursor solutions, concentrates and spray solutions, can be present in the form of solutions, emulsions or dispersions, which may contain one or more of the herbicidally active substances and adjuvants either in dissolved form or in a

non-dissolved finely-divided particle form.

Suitable spray solutions are prepared in such concentration that when sprayed at usual volume rates of about 100 l to 400 l per hectare, an amount of from 10g to 5000g of herbicidally active components per hectare is applied.

Preferred are an aqueous spray solution and a flowable aqueous formulation, in particular the ones which applied at a usual rate, provide a total use rate of 200g to 4000g and even more preferred from 500g to 3000g herbicidally active components per hectare.

Post-emergence treatment of the vegetation with the compositions of the invention may be done by application of the compositions, as formulated in different physical forms, to the plant species according to known methods, commonly used in the art to apply herbicides. Pre-emergence treatment is carried out by applying before or after sowing, according to known techniques, a suitable use rate of the compositions to the locus where germination or the growth of undesired vegetation has to be controlled.

The compositions of the invention at pre-emergence and/or post-emergence application show excellent phytotoxicity to a broad spectrum of broadleaf weeds and grasses such as for example, Alopecurus myosuroides, Galium aparine, Stellaria media, Viola arvensis, Matricaria recutica, Lamium purpureum and Veronica persica. The compositions show particularly high phytotoxicity in pre-emergence use to the latter weed which is difficult to control. Several of the above named weeds are common contaminants of crops of cereals. Moreover, the compositions of the invention show non-significant to low phytotoxicity to crops of cereals such as wheat, barley, rye, rice and corn.

Their excellent phytotoxicity to broadleaf weeds and grasses in combination with their high degree of safety for cereals means that the compounds of the invention are particularly useful for killing weeds and for controlling germination and growth of undesired weeds in crops of cereals.

The phytotoxicity of the compositions of the invention for undesired weeds depends on several parameters such as, for example, the use rate, the treatment period and weather conditions, the use at pre- or post-emergence stage and the plant species.

Experimental data which illustrate the excellent, selective phytotoxicity of the compounds of the invention, i.e. compositions and formulations comprising Compound B and IPU, are given in tables 2 and 3 hereafter.

The test conditions were as follows :

1. Pre-emergence application :

- greenhouse test with a photoperiod of 16 hours; a temperature of 8-12° C at night and 20-24° C during the day; an irradiance of 400 microeinstein/$m^2$/second,
- application rate 300 l/ha. with standard spraying equipment; 5 mm rainfall was given after spraying,
- spraying : 1 day after sowing,
- assessment : 19 days after spraying;
- results: the results, presented in percentage of phytotoxicity determined by visual observation, are shown in table 2.

2. Post-emergence application :

- greenhouse test with a photoperiod of 16 hrs., a temperature of 8-12° C at night and 20-24° C during the day; an irradiance of 400 microeinstein/$m^2$/second,
- application rate 300 l/ha with standard spray equipment; 5 mm rainfall given 9 days after spraying,
- spraying : slow germinating species : 43 days after sowing; normal germinating species : 40 days after sowing.
- assessment : 17 days after spraying;
- results : the results, presented in percentage of phytotoxicity determined by visual observation, are shown in table 3.

Table 2

| Results of pre-emergence treatment by compositions containing Compound A or B and IPU | | | | | | | | | | | | | | | | | | | |
|---|---|---|---|---|---|---|---|---|---|---|---|---|---|---|---|---|---|---|---|
| Composition Use Rate g/ha of Compound A or B / IPU | | Phytotoxicity ( in % per plant species (1) ) | | | | | | | | | | | | | | | | | |
| | | TRZAW | | HORVW | | ALOMY | | GALAP | | SINAL | | STEME | | VERPE | | VIOAR | | MATCH | |
| | | A* | B* | A* | B* | A* | B* | A* | B* | A* | B* | A* | B* | A* | B* | A* | B* | A* | B* (2) |
| 31 | 500 | 0 | 0 | 0 | 5 | 70 | 70 | 0 | 70 | 35 | 70 | 100 | 100 | 100 | 100 | 100 | 100 | 95 | 100 |
| 62 | 500 | 5 | 0 | 0 | 10 | 70 | 75 | 5 | 85 | 55 | 75 | 100 | 100 | 100 | 100 | 100 | 100 | 95 | 100 |
| 125 | 500 | 5 | 0 | 0 | 10 | 70 | 80 | 10 | 85 | 75 | 80 | 100 | 100 | 100 | 100 | 100 | 100 | 95 | 100 |
| 250 | 500 | 10 | 0 | 5 | 15 | 75 | 80 | 85 | 100 | 80 | 75 | 100 | 100 | 100 | 100 | 100 | 100 | 100 | 100 |
| 500 | 500 | 15 | 10 | 15 | 10 | 75 | 85 | 100 | 100 | 100 | 80 | 100 | 100 | 100 | 100 | 100 | 100 | 95 | 100 |
| 1000 | 500 | 20 | 15 | 10 | 10 | 80 | 95 | 100 | 100 | 100 | 80 | 100 | 100 | 100 | 100 | 100 | 100 | 100 | 100 |
| 31 | 1000 | 0 | 10 | 25 | 40 | 75 | 80 | 0 | 70 | 75 | 75 | 100 | 100 | 100 | 100 | 100 | 100 | 95 | 100 |
| 62 | 1000 | 0 | 5 | 25 | 40 | 75 | 85 | 10 | 80 | 70 | 80 | 100 | 100 | 100 | 100 | 100 | 100 | 95 | 100 |
| 125 | 1000 | 5 | 5 | 25 | 35 | 75 | 85 | 10 | 100 | 80 | 95 | 100 | 100 | 100 | 100 | 100 | 100 | 95 | 100 |
| 250 | 1000 | 10 | 10 | 30 | 35 | 75 | 90 | 80 | 100 | 100 | 90 | 100 | 100 | 100 | 100 | 100 | 100 | 100 | 100 |
| 500 | 1000 | - | 10 | - | 35 | - | 90 | - | 100 | - | 90 | - | 100 | 100 | 100 | 100 | 100 | 100 | 100 |
| 1000 | 1000 | 10 | 10 | 30 | 35 | 85 | 95 | 100 | 100 | 100 | 90 | 100 | 100 | 100 | 100 | 100 | 100 | 100 | 100 |
| 31 | 0 | 0 | 0 | 0 | 0 | 0 | 5 | 0 | 0 | 25 | 15 | 95 | 80 | 90 | 100 | 95 | 100 | 0 | 75 |
| 62 | 0 | 0 | 0 | 0 | 0 | 0 | 15 | 10 | 80 | 33 | 20 | 99 | 100 | 95 | 100 | 100 | 100 | 15 | 80 |
| 125 | 0 | 0 | 0 | 0 | 0 | 0 | 30 | 30 | 70 | 70 | 30 | 100 | 95 | 100 | 100 | 100 | 100 | 25 | 85 |
| 250 | 0 | 0 | 0 | 0 | 0 | 5 | 50 | 60 | 100 | 75 | 40 | 100 | 100 | 100 | 100 | 100 | 100 | 50 | 90 |
| 500 | 0 | 5 | 10 | 5 | 0 | 10 | 60 | 85 | 100 | 95 | 50 | 100 | 100 | 100 | 100 | 100 | 100 | 75 | 95 |
| 1000 | 0 | 10 | 20 | 15 | 0 | 65 | 65 | 100 | 100 | 100 | 60 | 100 | 100 | 100 | 100 | 100 | 100 | 85 | 100 |
| 0 | 500 | 0 | 0 | 10 | 10 | 70 | 70 | 0 | 0 | 60 | 60 | - | - | 95 | 95 | 75 | 75 | 90 | 90 |
| 0 | 1000 | 10 | 10 | 40 | 40 | 75 | 75 | 20 | 20 | 75 | 75 | - | - | 95 | 95 | 80 | 80 | 95 | 95 |

(1) : Legend : see after table 3.
(2) : Columns A* and B* indicate the results obtained with compositions containing Compound A or B and IPU, respectively.

Table 3 : Results of post-emergence treatment by compositions containing Compound A or B and IPU

| Composition Use Rate g/ha of Compound A or B | IPU | TRZAW A* | TRZAW B* | HORVW A* | HORVW B* | ALOMY A* | ALOMY B* | GALAP A* | GALAP B* | SINAL A* | SINAL B* | STEME A* | STEME B* | GERMO A* | GERMO B* | LAMPU A* | LAMPU B* | VERPE A* | VERPE B* | MATCH A* | MATCH B* (2) |
|---|---|---|---|---|---|---|---|---|---|---|---|---|---|---|---|---|---|---|---|---|---|
| 31 | 500 | 0 | 0 | 0 | 0 | 85 | 85 | 0 | 50 | 25 | 55 | 85 | 75 | 0 | 0 | 15 | 60 | 30 | 40 | 80 | 75 |
| 62 | 500 | 0 | 0 | 0 | 0 | 80 | 80 | 25 | 75 | 35 | 70 | 80 | 80 | 0 | 0 | 20 | 55 | 25 | 40 | 80 | 80 |
| 125 | 500 | 0 | 0 | 0 | 0 | 80 | 85 | 20 | 75 | 40 | 70 | 80 | 85 | 0 | 0 | 30 | 75 | 40 | 55 | 80 | 80 |
| 250 | 500 | 0 | 0 | 0 | 0 | 85 | 85 | 50 | 80 | 45 | 75 | 80 | 90 | 0 | 5 | 40 | 85 | 40 | 65 | 80 | 85 |
| 500 | 500 | 0 | 5 | 0 | 5 | 85 | 90 | 55 | 80 | 60 | 85 | 85 | 85 | 0 | 20 | 60 | 90 | 55 | 70 | 85 | 90 |
| 1000 | 500 | 5 | 5 | 0 | 10 | 85 | 90 | 70 | 90 | 70 | 90 | 80 | 95 | 5 | 15 | 70 | 85 | 85 | 70 | 85 | 85 |
| 31 | 1000 | 0 | 0 | 0 | 0 | 85 | 85 | 5 | 65 | 35 | 70 | 90 | 95 | 0 | 0 | 0 | 75 | 35 | 35 | 90 | 95 |
| 62 | 1000 | 0 | 0 | 0 | 0 | 85 | 90 | 20 | 70 | 45 | 70 | 95 | 85 | 0 | 0 | 50 | 85 | 40 | 50 | 90 | 95 |
| 125 | 1000 | 0 | 0 | 0 | 0 | 85 | 90 | 15 | 75 | 50 | 75 | 90 | 95 | 0 | 0 | 45 | 80 | 40 | 70 | 90 | 95 |
| 250 | 1000 | 0 | 0 | 0 | 0 | 85 | 95 | 35 | 75 | 60 | 80 | 85 | 95 | 0 | 5 | 55 | 80 | 45 | 60 | 95 | 99 |
| 500 | 1000 | 5 | 0 | 5 | 5 | 90 | 95 | 60 | 80 | 60 | 85 | 95 | 95 | 0 | 10 | 75 | 85 | 65 | 65 | 95 | 99 |
| 1000 | 1000 | 5 | 10 | 5 | 10 | 90 | 99 | 65 | 85 | 65 | 95 | 95 | 80 | 10 | 20 | 85 | 90 | 65 | 60 | 99 | 99 |
| 31 | 0 | 0 | 0 | 0 | 0 | 0 | 0 | 0 | 60 | 0 | 50 | 25 | 30 | 0 | 0 | 0 | 50 | 20 | 20 | 0 | 0 |
| 62 | 0 | 0 | 0 | 0 | 0 | 0 | 0 | 15 | 70 | 0 | 60 | 25 | 40 | 0 | 0 | 0 | 55 | 20 | 25 | 0 | 0 |
| 125 | 0 | 0 | 0 | 0 | 0 | 0 | 0 | 25 | 60 | 0 | 65 | 30 | 55 | 0 | 0 | 5 | 70 | 30 | 35 | 0 | 0 |
| 250 | 0 | 0 | 0 | 0 | 0 | 0 | 5 | 25 | 80 | 10 | 70 | 55 | 60 | 0 | 0 | 50 | 80 | 35 | 40 | 0 | 0 |
| 500 | 0 | 0 | 0 | 0 | 5 | 0 | 15 | 40 | 80 | 30 | 80 | 50 | 75 | 0 | 5 | 70 | 85 | 45 | 55 | 0 | 5 |
| 1000 | 0 | 0 | 0 | 0 | 10 | 20 | 25 | 70 | 85 | 40 | 85 | 80 | 75 | 5 | 10 | 80 | 90 | 65 | 60 | 5 | 10 |
| 0 | 500 | 0 | 0 | 0 | 0 | 80 | 80 | 0 | 30 | 35 | 35 | 80 | 80 | 0 | 0 | 40 | 40 | 25 | 25 | 85 | 85 |
| 0 | 1000 | 5 | 0 | 0 | 0 | 85 | 85 | 0 | 40 | 40 | 40 | 95 | 95 | 0 | 0 | 0 | 0 | 35 | 35 | 95 | 95 |

(1) : Legend : see after table 3.

(2) : Columns A* and B* indicate the results obtained with compositions containing Compound A or B and IPU, respectively.

Legend for tables 2 and 3

The abbreviations used refer to the following plant species :
TRZAW : Wheat cv. Camp Remy
HORVW : Barley cv. Gerbel
ALOMY : Alopecurus myosuroides GALAP : Galium aparine
SINAL : Sinapis alba
STEME : Stellaria media
VERPE : Veronica persica
VIOAR : Viola arvensis
MATCH : Matricaria recutica
GERMO : Geranium molle
LAMPU : Lamium purpureum

The phytotoxicity data of tables 2 and 3 further demonstrate that, in comparison with compositions comprising Compound A and IPU, the compositions of the invention show for many weed species a superior degree of phytotoxicity in pre-emergence and post-emergence application.

This superior, selective herbicidal effect is pronounced in pre-emergence application to Alopecurus myosuroides, Sinapis alba, and in particular to Galium aparine, a species the growth of which is difficult to control. The effect is clearly noticeable at the lower partial rates of Compound B in the compositions, e.g. at rates of 31g to 250g/ha.

At post-emergence application the superior herbicidal effect is clearly shown by the results for the species Sinapis alba, Lamium purpureum, Veronica persica and in particular for Galium aparine. It is noticeable, in particular, at lower partial rates of Compound B in the compositions, e.g. at rates of 31g to 250g/ha.

Besides, the data in tables 2 and 3 indicate that in order to obtain an economically acceptable phytotoxicity of about 85% for most weeds, lower rates of the compositions of the invention can be used than the rates required for the single herbicidally active components of the compositions applied alone. This property of the compositions of the invention constitutes a significant technical advantage over the prior art compositions.

## Claims

1. A herbicidal composition comprising isoproturon and a triazole derivative which is 1->4-chloro-3-(2, 2, 3, 3, 3-pentafluoropropoxymethyl) phenyl<-5-phenyl-1H-1, 2, 4-triazole-3-carboxamide.

2. A composition of Claim 1 wherein the weight ratio triazole derivative : isoproturon is within the range of 3:1 to 1:50.

3. A composition of Claim 2 wherein the weight ratio triazole derivative : isoproturon is within the range of 2:1 to 1:33.

4. A composition of Claim 1 wherein the weight ratio triazole derivative : isoproturon is within the range of 1:5 to 1:20.

5. A composition of any of Claims 1 to 4 which further comprises at least one agriculturally acceptable adjuvant.

6. A method for the control of undesired plants, which comprises applying to the plants, to the seeds thereof or to the locus of the plants or the seeds a composition according to any of Claims 1 to 5.

7. A method according to Claim 6 in which the undesired plants are Galium aparine.

8. A method according to Claim 6 for the selective control of Alopecurus myosuroides, Sinapis alba and Galium aparine which comprises pre-emergent application of a composition according to any of Claims 1 to 5.

9. A method according to Claim 6 for the selective control of Sinapis alba, Lamium purpureum, Veronica persica and Galium aparine which comprises post-emergent application to the plants or to the locus of the plants of a composition according to any of Claims 1 to 5.

10. A method according to any of Claims 1 to 9 for the control of undesired plants in crops of cereals.

11. A method according to any of Claims 6 to 10 comprising applying a total rate of 10g to 5000g active herbicidal substances per hectare.

12. A method according to Claim 11 wherein the total rate is 200g to 4000g active herbicidal substances per hectare.

13. A method according to Claim 12 wherein the total rate is from 500g to 3000g active herbicidal

substances per hectare.